(19) Europäisches Patentamt
European Patent Office
Office européen des brevets

(11) **EP 4 127 361 B1**

(12) **FASCICULE DE BREVET EUROPEEN**

(45) Date de publication et mention
de la délivrance du brevet:
**20.11.2024 Bulletin 2024/47**

(21) Numéro de dépôt: **21713976.5**

(22) Date de dépôt: **25.03.2021**

(51) Classification Internationale des Brevets (IPC):
**E04H 4/12** *(2006.01)*     **C02F 1/00** *(2023.01)*
**C02F 103/42** *(2006.01)*

(52) Classification Coopérative des Brevets (CPC):
**E04H 4/1209; C02F 1/001; C02F 1/008;**
C02F 2103/42; C02F 2209/001; C02F 2209/005;
C02F 2209/29; C02F 2209/40; C02F 2301/046;
C02F 2303/14

(86) Numéro de dépôt international:
**PCT/EP2021/057822**

(87) Numéro de publication internationale:
**WO 2021/198037 (07.10.2021 Gazette 2021/40)**

(54) **PROCÉDÉ DE RENOUVELLEMENT D'EAU DANS UN CIRCUIT DE FILTRATION POUR PISCINE ET CIRCUIT DE FILTRATION DE PISCINE**

VERFAHREN ZUM ERSETZEN VON WASSER IN EINEM SCHWIMMBADFILTERKREISLAUF UND SCHWIMMBADFILTERKREISLAUF

METHOD FOR REPLACING WATER IN A SWIMMING POOL FILTRATION CIRCUIT AND SWIMMING POOL FILTRATION CIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.03.2020 FR 2003153**

(43) Date de publication de la demande:
**08.02.2023 Bulletin 2023/06**

(73) Titulaire: **ONSEN**
**69100 Villeurbanne (FR)**

(72) Inventeurs:
• **MENEZ, Yann**
**38200 Villette-de-Vienne (FR)**
• **POLICARD, Jérôme**
**69480 Anse (FR)**

(74) Mandataire: **Jacobacci Coralis Harle**
**32, rue de l'Arcade**
**75008 Paris (FR)**

(56) Documents cités:
EP-A1- 0 805 246          WO-A1-2010/052419
DE-A1- 102005 035 238     DE-A1- 102007 052 520

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

## Domaine technique auquel se rapporte l'invention

La présente invention concerne un procédé de renouvellement d'eau, dans un circuit de filtration pour piscine, ainsi qu'un dispositif apte à mettre en oeuvre ledit procédé.

## Arrière-plan technologique

Pour des raisons sanitaires, la réglementation impose un traitement quotidien de l'eau des piscines publiques, afin de prévenir un risque d'irritation ou d'intoxication pour les baigneurs.

À titre d'exemple, la fermeture d'une piscine publique est ordonnée par les services de l'état, lorsque le taux de chloramines présent dans le circuit de filtration de la piscine dépasse une valeur critique égale à 0,6mg/L. Il est admis qu'au-delà de cette valeur critique, les baigneurs sont exposés à des risques d'irritation des muqueuses, des yeux et des voies respiratoires.

Afin de maintenir le taux de chloramines en dessous de cette valeur critique, la réglementation impose de renouveler quotidiennement l'eau de la piscine, au minimum d'une quantité de 30 litres d'eau par baigneur ayant fréquenté la piscine.

Or, actuellement, par mesure de précaution les exploitants des piscines publiques renouvèlent quotidiennement entre 60 litres et 100 litres d'eau par baigneur, afin de s'assurer de maintenir le taux de chloramine en dessous de la valeur critique de 0,6mg/L.

L'invention vise à proposer un procédé de renouvellement d'eau dans un circuit de filtration pour piscine, permettant de limiter le taux d'un agent pathogène et/ou d'un agent chimique dans l'eau présente dans le circuit de filtration, en dessous d'une valeur critique, tout en étant plus économique en eau. WO 2010/052419, DE10 2007 052520 A1, DE 10 2005 035238 A1 et EP 0 805 246 A1 montrent des procédés selon le préambule de la revendication 1.

## Objet de l'invention

Pour cela, l'invention propose un procédé de renouvellement d'eau dans un circuit de filtration pour piscine, mettant en oeuvre les étapes suivantes : mesure de la précédente quantité d'eau renouvelée dans le circuit de filtration de la piscine et mesure d'un paramètre de propreté de l'eau présente dans le circuit de filtration.

L'invention est remarquable en ce que le procédé de renouvellement met en oeuvre une étape de renouvellement d'une quantité d'eau dans le circuit de filtration, en proportion de la valeur d'un produit entre, la précédente quantité d'eau renouvelée dans le circuit de filtration et un facteur correctif, le facteur correctif étant un rapport entre le paramètre de propreté mesuré et une valeur de référence du paramètre de propreté.

De façon avantageuse, en prenant en compte un paramètre de propreté ainsi que le nombre de baigneurs fréquentant la piscine, l'invention permet une estimation plus précise de la quantité d'eau à renouveler afin de conserver une qualité d'eau souhaitée.

En d'autres termes, l'invention permet avantageusement de prendre en compte au moins deux critères intrinsèques à la fréquentation réelle de la piscine, le nombre de baigneurs et la pollution de l'eau au moment du renouvellement d'eau, pour déterminer précisément la quantité d'eau à renouveler afin de préserver la qualité de l'eau.

Le procédé selon l'invention permet de ce fait une gestion plus rigoureuse de la quantité d'eau renouvelée. Ainsi, l'invention permet de réduire de façon significative la quantité d'eau nécessaire à renouveler pour préserver la qualité de l'eau de la piscine.

Selon un autre mode de réalisation, la quantité d'eau renouvelée est proportionnelle au nombre de baigneurs ayant fréquenté la piscine, entre le dernier procédé de renouvellement d'eau et le moment où le présent procédé de renouvellement est mis en oeuvre.

Selon un autre mode de réalisation, la quantité d'eau renouvelée est égale ou supérieure à 30 litres par baigneurs ayant fréquenté la piscine, entre le dernier procédé de renouvellement d'eau et le moment où le présent procédé de renouvellement est mis en oeuvre. De préférence, la quantité d'eau renouvelée par baigneur ayant fréquenté la piscine, est comprise entre 30 litres et 50 litres.

Selon un autre mode de réalisation, la quantité d'eau renouvelée est inversement proportionnelle au nombre de baigneurs ayant fréquenté le bassin entre, un dernier procédé de renouvellement d'eau et un avant-dernier procédé de renouvellement d'eau.

Selon un autre mode de réalisation, la précédente quantité d'eau renouvelée dans le circuit de filtration est mesurée en entrée d'un échangeur thermique, la sortie de l'échangeur thermique étant reliée fluidiquement au circuit de filtration, et une partie de l'eau présente dans le circuit de filtration passe à travers l'échangeur thermique de sorte à céder une partie de ses calories à l'eau introduite en entrée de l'échangeur thermique.

De préférence, la précédente quantité d'eau renouvelée est déterminée selon un rapport entre, la précédente quantité d'eau introduite en entrée de l'échangeur thermique et, la précédente quantité d'eau renouvelée dans le circuit de filtration.

Selon un autre mode de réalisation, une portion d'eau présente dans le circuit de filtration et s'écoulant entre un dispositif de filtration et une piscine, passe à travers l'échangeur thermique avant d'être réintroduite dans le circuit de filtration au niveau du dispositif de filtration.

Selon un autre mode de réalisation, la quantité d'eau renouvelée passant à travers l'échangeur thermique est introduite dans le circuit de filtration, au niveau d'un bac tampon, le bac tampon est alimenté en eau par la piscine.

Selon un autre mode de réalisation, le paramètre de propreté comprend un taux de chloramines de l'eau présente dans le circuit de filtration.

Selon un autre mode de réalisation, le procédé de renouvellement d'eau est mis en oeuvre de façon périodique, de préférence quotidiennement.

Selon un autre mode de réalisation, la mesure du paramètre de propreté est réalisée au moins une fois entre deux renouvellements d'eau dans le circuit de filtration, et le procédé de renouvellement est mis en oeuvre dès lors que la valeur du paramètre de propreté mesuré dépasse une valeur prédéterminée. De préférence, le paramètre de propreté comprend un taux de chloramines et la valeur prédéterminée du taux de chloramine comprise entre 0 et 60 mg/L.

L'invention porte également sur un programme informatique comportant des instructions pour la mise en oeuvre d'un procédé de renouvellement d'eau dans un circuit de filtration pour piscine, tel que décrit ci-dessus, lorsque ces instructions sont exécutées par un processeur.

L'invention concerne aussi un dispositif de renouvellement d'eau dans un circuit de filtration pour piscine, comprenant :

- une piscine pour baigneurs, la piscine alimentant en eau un bac tampon, le bac tampon alimentant en eau une pompe, la pompe alimentant en eau un filtre, le filtre alimentant en eau la piscine ; et
- des moyens de renouvellement d'une quantité d'eau dans le circuit de filtration ; et
- des moyens de mesure de la quantité d'eau renouvelée dans le circuit de filtration; et
- des moyens de comptage du nombre de baigneurs fréquentant la piscine ; et
- des moyens de mesure d'un paramètre de propreté de l'eau circulant dans le circuit de filtration ; et
- un processeur connecté :

      * à une unité de mémorisation ;
      * aux moyens de mesure d'une quantité d'eau renouvelée dans le circuit de filtration ; et
      * aux moyens de comptage du nombre de baigneurs fréquentant la piscine ; et
      * aux moyens de mesure d'un paramètre de propreté de l'eau circulant dans le circuit de filtration.

Le dispositif de renouvellement d'eau est remarquable en ce que le processeur pilote les moyens de renouvellement d'une quantité d'eau dans le circuit de filtration, et le processeur est apte à mettre en oeuvre un procédé de renouvellement d'eau dans le circuit de filtration tel que décrit ci-dessus, mémorisé par l'unité de mémorisation.

Selon une variante de réalisation, une partie de l'eau présente dans le circuit de filtration passe à travers un échangeur thermique, de sorte à céder des calories à au moins une partie d'une eau destinée à être ajoutée dans le circuit de filtration.

De préférence, les moyens de mesure d'une quantité d'eau renouvelée dans le circuit de filtration, sont agencés de sorte à mesurer une quantité d'eau introduite dans l'échangeur thermique et destinée à être ajoutée dans le circuit de filtration.

## Description de la figure

L'invention sera mieux comprise, grâce à la description ci-après, qui se rapporte à des modes de réalisations préférés, donnés à titre d'exemple non limitatif, et illustré par la figure suivante :

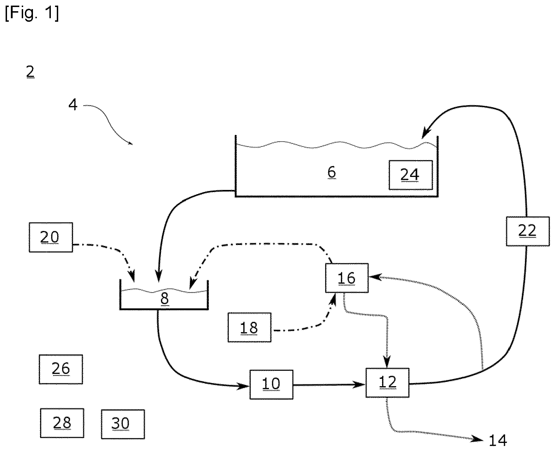

[Fig. 1] est une représentation schématique d'un dispositif de renouvellement d'eau dans un circuit de filtration d'une piscine, apte à mettre en oeuvre un procédé de renouvellement d'eau selon l'invention.

## Description de modes de réalisation détaillés de l'invention

Comme mentionné ci-dessus, l'exploitation d'une piscine publique est subordonnée au respect strict des normes sanitaires, notamment au maintien de paramètres de propreté de l'eau, en dessous de valeurs critiques définies par la réglementation.

À titre d'exemple, la réglementation impose un contrôle journalier du taux de chloramines présent dans l'eau circulant dans un circuit de filtration d'une piscine publique, afin de s'assurer que ce taux de chloramines reste bien inférieur à 0,6mg/L. La réglementation impose également de renouveler, à minima, 30 litres d'eau dans le circuit de filtration, pour chaque baigneur ayant fréquenté la piscine entre deux cycles de renouvellement d'eau.

En pratique, afin de s'assurer que le taux de chloramines ne dépasse pas la limite réglementaire, il est habituel pour les exploitants des piscines publiques de renouveler une quantité d'eau nettement supérieure par baigneur, de l'ordre de 60 litres à 100 litres.

La présente invention propose un procédé de renouvellement d'eau dans un circuit de filtration pour piscine, permettant de limiter le taux de chloramine en dessous de la limite réglementaire, tout en étant plus économe en eau renouvelée.

Pour cela, le procédé de renouvellement met en oeuvre quotidiennement, une première étape consistant à mesurer ou à prendre connaissance par l'intermédiaire d'un dispositif tiers, de la quantité d'eau renouvelée ($VR_j$) lors d'un précédent renouvellement d'eau dans le circuit de filtration de la piscine, le nombre de baigneurs ayant fréquenté la piscine ainsi que la quantité d'eau perdue par le circuit de filtration depuis le dernier procédé de renouvellement.

Lors de cette première étape, il est également réalisé par l'intermédiaire de moyens connus, une mesure du taux de chloramines ($C_j$) dans l'eau du circuit de filtration.

Lors d'une deuxième étape, le procédé de renouvellement met en oeuvre une étape de calcul de la quantité d'eau à renouveler ($VR_j$) dans le circuit de filtration, à partir de la formule de renouvellement suivante :

$$VR_j = \frac{VR_{j-1}}{FB_{j-2}} * FB_{j-1} * C_j * VF_j$$

où,

- $VR_j$ désigne la quantité d'eau à renouveler dans le circuit de filtration le jour j ;
- $VR_{j-1}$ désigne la quantité d'eau renouvelée dans le circuit de filtration le jour j-1 ;
- $FB_{j-1}$ désigne le nombre de baigneurs ayant fréquenté la piscine le jour j-1 ;
- $C_j$ est un facteur correctif proportionnel au rapport entre le taux de chloramine mesuré au jour j et la valeur limite du taux de chloramine défini par la réglementation, dans le cas présent 0,6mg/L ;
- $VF_j$ désigne la quantité d'eau perdue par le circuit de filtration depuis le dernier procédé de renouvellement, c'est-à-dire, entre le jour j-1 et le jour j ;

Lors d'une troisième étape, la quantité d'eau à renouveler ($VR_j$) déterminée à partir de la formule de renouvellement est renouvelée dans le circuit de filtration.

Il est à noter que la formule de renouvellement prend en compte le nombre de baigneurs ($FB_{j-1}$) ayant fréquenté la piscine le jour précédent le renouvellement d'eau (j-1) ainsi que le taux de chloramines dans le circuit de filtration, le jour j du renouvellement d'eau.

De façon avantageuse, en prenant en compte ces deux paramètres, la formule de renouvellement permet une détermination plus précise de la quantité d'eau à renouveler pour maintenir le taux de chloramines en dessous d'une valeur réglementaire. En d'autres termes, la formule de renouvellement permet de déterminer une quantité d'eau à renouveler en prenant en compte les conditions réelles d'exploitation de la piscine : fréquentation en baigneurs et propreté de l'eau.

Les inventeurs ont constaté que le procédé de renouvellement décrit ci-dessus permet très avantageusement de réaliser des économies substantielles d'eau, de l'ordre de 30% pour renouveler l'eau d'une piscine de 2 900 mètres cubes, afin de maintenir le taux de chloramines en dessous de 0,6mg/L.

L'invention porte également sur les variantes suivantes du procédé de renouvellement décrit ci-dessus.

Selon une première variante, la formule de renouvellement comprend un autre terme multiplicateur, permettant d'adapter la valeur calculée de quantité d'eau à renouveler en fonction de caractéristiques propres à chaque circuit de filtration. Selon un exemple non limitatif, à chaque circuit de filtration peut être associée une valeur de référence propre, correspondant au rapport des valeurs suivantes : $VR_{j-1}C_A$ divisé par $FB_{j-2}$. Le terme $VR_{j-1}$ correspond à la somme totale de tous les $VR_{j-1}C_X$ correspondant à chaque bassin composant alimenté par le circuit de filtration. Le terme $C_A$ fait référence aux propriétés du circuit de filtration. En d'autres termes, le procédé de renouvellement peut calculer un volume de renouvellement d'eau spécifique aux propriétés d'un circuit de filtration et à la qualité de l'eau circulant dans ledit circuit.

Selon une deuxième variante, la formule de renouvellement comprend un autre terme multiplicateur, relatant un ou plusieurs paramètres météorologiques, par exemple la température de l'air, un taux d'hygrométrie relative, un taux de dioxyde de carbone, l'ensoleillement, l'orientation et/ou la vitesse du vent...

Selon un exemple non limitatif d'un facteur correctif, un facteur correctif peut prendre en compte l'ensoleillement sous la forme d'un terme Cm. La valeur du terme Cm est définie comme supérieure à 1 lorsque par exemple, la température extérieure de l'air est supérieure à 25°C. La formule de renouvellement est alors de la forme :

$$VR_j = \frac{VR_{j-1}}{FB_{j-2}} * FB_{j-1} * C_j * VF_j * Cm$$

Selon une troisième variante, la formule de renouvellement comprend un autre terme multiplicateur, relatant un changement atmosphérique dans une enceinte contenant la piscine, par exemple la température à l'intérieur de l'enceinte, un taux d'hygrométrie relative dans l'enceinte, un taux de dioxyde de carbone dans l'enceinte, un taux de matière en suspension dans l'enceinte, un taux de trihalogénométhanes dans l'enceinte, un taux de trichloramines dans l'enceinte, etc.

Selon une quatrième variante, le procédé de renouvellement comprend une étape supplémentaire, consistant à mesurer le taux de chloramines de façon périodique entre deux procédés de renouvellement, une ou plusieurs fois entre deux renouvellements d'eau. Lorsque le taux de chloramines dépasse une valeur prédéterminée, le procédé de renouvellement est de suite mis en oeuvre.

Selon une cinquième variante, la périodicité de mise en oeuvre du procédé de renouvellement d'eau est comprise entre 12 heures et 48 heures, de préférence entre 18 heures et 30 heures, de préférence de l'ordre de 24 heures.

Selon une sixième variante, le procédé de renouvellement est adapté de sorte à déterminer la quantité d'eau à renouveler ($VR_j$) dans le circuit de filtration, en fonction d'un autre paramètre de propreté de l'eau. À titre d'exemple, non limitatif, le taux de chloramines peut être substitué par le taux de l'un des composés chimiques suivants : pH, chlore libre, chlorure, conductivité, acide cyanurique, turbidité...

Selon un autre exemple non limitatif, le taux de chloramines peut également être substitué par un taux de l'un des agents pathogènes suivants : conformes totaux, germes aérobies revivifiables à 22°C et 37°C, staphylocoques pathogènes...

Selon une septième variante, lors du procédé de renouvellement, l'eau ajoutée au circuit de filtration passe préalablement à travers un échangeur thermique afin d'accroître sa température, préalablement à son introduction dans le circuit de filtration. De préférence, la chaleur cédée par l'échangeur thermique provient d'une partie de l'eau déjà présente dans le circuit de filtration.

Selon une huitième variante, le nombre de baigneurs fréquentant la piscine pris en compte dans le calcul de la fonction de renouvellement peut être évalué en temps réel par l'intermédiaire de moyens de comptage dédiés (système vidéo, comptage d'entrée et de sortie en temps réel,...). Selon une autre alternative, le nombre de baigneurs peut être estimé pour la journée à venir à l'aide d'un algorithme prédictif.

Bien entendu, les différentes variantes décrites ci-dessus peuvent se combiner entre elles afin d'obtenir d'autres exemples de procédé de renouvellement non explicitement décrits.

L'invention concerne aussi un dispositif de renouvellement d'eau dans un circuit de filtration d'une piscine, apte à mettre en oeuvre l'un des procédés de renouvellement d'eau décrit ci-dessus.

Selon un exemple non limitatif, un dispositif de renouvellement d'eau 2 selon l'invention, comprend un circuit de filtration 4 d'une piscine. Le circuit de filtration se compose d'une piscine 6 ou bassin destiné à accueillir des baigneurs. La piscine alimente en eau un bac tampon 8. Le bac tampon alimente en eau une pompe 10. La pompe alimente en eau un filtre 12. Le filtre alimente en eau la piscine 6.

Le circuit de filtration 4 comprend également un échangeur thermique 16, à travers lequel s'écoule une partie de l'eau circulant entre le filtre 12 et la piscine 6, avant d'être réintroduite dans le circuit de filtration au niveau du filtre 12.

Selon le présent exemple, le filtre est apte à évacuer une partie de l'eau s'écoulant dans le circuit de filtration à l'extérieur 14, par exemple lors d'un procédé de nettoyage du filtre.

Le dispositif de filtration 2 comprend également un premier dispositif d'alimentation 18 en eau, relié fluidiquement à une entrée de l'échangeur thermique 16. Le premier dispositif d'alimentation 18 comprend des moyens de mesure de la quantité d'eau s'écoulant dudit dispositif. De façon avantageuse, l'eau provenant du premier dispositif d'alimentation 18 s'écoule à travers l'échangeur thermique 16, préalablement à son introduction dans le bac tampon 8.

Le dispositif de filtration 2 comprend aussi un second dispositif d'alimentation 20 en eau, apte à alimenter en eau le bac tampon 8. Le second dispositif d'alimentation 20 comprend également des moyens de mesure de la quantité d'eau s'écoulant dudit dispositif.

Le dispositif de filtration 2 comprend aussi des moyens de mesure 22 du taux de chloramines dans l'eau circulant dans le circuit de filtration, des moyens de comptage 24 du nombre de baigneurs fréquentant la piscine et des moyens de mesure 26 de la quantité d'eau renouvelée dans le circuit de filtration. Les moyens de mesure 26 de la quantité d'eau renouvelée dans le circuit de filtration 4 sont connectés au filtre 12, de manière à connaître la quantité d'eau évacuée du circuit de filtration 2 à travers le filtre 12, ainsi qu'au premier et au second dispositifs d'alimentation en eau afin de connaître précisément la quantité d'eau ajoutée au circuit de filtration. Par le terme « connecté », on entend la possibilité pour deux entités d'échanger de l'information de façon réciproque ou non. L'échange d'information peut être réalisé par l'intermédiaire de moyens physiques tels que des câbles électriques, ou bien par l'intermédiaire d'ondes électromagnétiques par exemple utilisées dans le cadre de la norme de communication « WIFI » ou « Bluetooth ». Ces moyens de connexions ne sont pas représentés sur la figure 1 afin de faciliter la compréhension de l'invention.

Le dispositif de filtration 2 comprend aussi un processeur 28 connecté à une unité de mémorisation 30.

Le processeur 28 est également connecté aux éléments mentionnés ci-dessus, plus précisément aux éléments suivants : le premier dispositif d'alimentation 18, le second dispositif d'alimentation 20, aux moyens de mesure 22 du taux de chloramines dans l'eau s'écoulant dans le circuit de filtration 4, aux moyens de mesure 24 du nombre de baigneurs fréquentant la piscine et aux moyens de mesure 26 de la quantité d'eau renouvelée dans le circuit de filtration.

Le processeur 28 est apte à mettre en oeuvre un programme informatique mémorisé par l'unité de mémorisation, le programme informatique comprenant les étapes d'un procédé de renouvellement tel que décrit ci-dessus.

## Revendications

1. Procédé de renouvellement d'eau dans un circuit de filtration (2) pour piscine, mettant en oeuvre les étapes suivantes :

   - mesure de la précédente quantité d'eau renouvelée dans le circuit de filtration (2) de la piscine ; et
   - mesure d'un paramètre de propreté (C) de l'eau présente dans le circuit de filtration (2) ;

   **caractérisé en ce que** le procédé de renouvellement met en oeuvre une étape de renouvellement d'une quantité d'eau (VR$_j$) dans le circuit de filtration (2), en proportion de la valeur d'un produit entre, la précédente quantité d'eau renouvelée (VR$_{j-1}$) dans le circuit de filtration (2) et un facteur correctif (C$_j$), le facteur correctif étant un rapport entre le paramètre de propreté (C) mesuré et une valeur de référence du paramètre de propreté.

2. Procédé de renouvellement d'eau dans un circuit de filtration (2) pour piscine selon la revendication 1, **caractérisé en ce que** la quantité d'eau renouvelée (VR$_j$) est proportionnelle au nombre de baigneurs ayant fréquenté la piscine, entre le dernier procédé de renouvellement d'eau (VR$_{j-1}$) et le moment où le présent procédé de renouvellement (VR$_j$) est mis en oeuvre.

3. Procédé de renouvellement d'eau dans un circuit de filtration (2) pour piscine selon la revendication 2, **caractérisé en ce que** la quantité d'eau renouvelée (VR$_j$) est égale ou supérieure à 30 litres par baigneurs ayant fréquenté la piscine, entre le dernier procédé de renouvellement d'eau (VR$_{j-1}$) dans un circuit de filtration (2) de la piscine et le moment où le présent procédé de renouvellement (VR$_j$) est mis en oeuvre.

4. Procédé de renouvellement d'eau dans un circuit de filtration (2) pour piscine selon l'une des revendications 1 à 3, **caractérisé en ce que** la quantité d'eau renouvelée (VR$_j$) est inversement proportionnelle au nombre de baigneurs ayant fréquenté le bassin entre, un dernier procédé de renouvellement d'eau (VR$_{j-1}$) et un avant-dernier procédé de renouvellement d'eau (VR$_{j-2}$).

5. Procédé de renouvellement d'eau dans un circuit de filtration (2) pour piscine selon l'une des revendications 1 à 4, **caractérisé en ce que** la précédente quantité d'eau renouvelée dans le circuit de filtration (2) est mesurée en entrée d'un échangeur thermique, la sortie de l'échangeur thermique étant reliée fluidiquement au circuit de filtration (2), et **en ce qu'**une partie de l'eau présente dans le circuit de filtration (2) passe à travers l'échangeur thermique de sorte à céder une partie de ses calories à l'eau introduite en entrée de l'échangeur thermique.

6. Procédé de renouvellement d'eau dans un circuit de filtration (2) pour piscine selon la revendication 5, **caractérisé en ce que** la précédente quantité d'eau renouvelée (VR$_{j-1}$) est déterminée, selon un rapport entre la précédente quantité d'eau introduite en entrée de l'échangeur thermique et la précédente quantité d'eau renouvelée dans le circuit de filtration (2).

7. Procédé de renouvellement d'eau dans un circuit de filtration (2) pour piscine selon la revendication 5 ou 6, **caractérisé en ce qu'**une portion d'eau présente dans le circuit de filtration (2) et s'écoulant entre un dispositif de filtration et un dispositif de chauffage du circuit de filtration (2), passe à travers l'échangeur thermique avant d'être réintroduite dans le circuit de filtration (2) au niveau du dispositif de filtration.

8. Procédé de renouvellement d'eau dans un circuit de filtration (2) pour piscine selon l'une des revendications 5 à 7, **caractérisé en ce que** la quantité d'eau renouvelée passant à travers l'échangeur thermique, est introduite dans le circuit de filtration (2) au niveau d'un bac tampon, le bac tampon est alimenté en eau par la piscine.

9. Procédé de renouvellement d'eau dans un circuit de filtration (2) pour piscine selon l'une des revendications 1 à 8, **caractérisé en ce que** le paramètre de propreté (C) comprend un taux de chloramines.

10. Procédé de renouvellement d'eau dans un circuit de filtration (2) pour piscine selon l'une des revendications 1 à 9, **caractérisé en ce que** le procédé de renouvellement d'eau est mis en oeuvre de façon périodique, de préférence quotidiennement.

11. Procédé de renouvellement d'eau dans un circuit de filtration (2) pour piscine selon l'une des revendications 1 à 10, **caractérisé en ce que** la mesure du paramètre de propreté (C) est réalisée au moins une fois entre deux renouvellements d'eau dans le circuit de filtration (2), et **en ce que** le procédé de renouvellement est mis en oeuvre dès lors que la valeur du paramètre de propreté (C) mesuré dépasse une valeur prédéterminée.

12. Programme informatique comportant des instructions pour la mise en oeuvre d'un procédé de renouvellement d'eau dans un circuit de filtration (2) pour piscine selon l'une des revendications 1 à 11, lorsque ces instructions sont exécutées par un processeur.

13. Circuit de filtration (2) de piscine comprenant:

   - une piscine (6) pour baigneurs, la piscine alimentant en eau un bac tampon (8), le bac tampon alimentant en eau une pompe (10), la pompe alimentant en eau un filtre (12), le filtre alimentant en eau la piscine (6) ; et
   - des moyens de renouvellement (14, 18, 20) d'une quantité d'eau dans le circuit de filtration (2); et
   - des moyens de mesure (26) de la quantité d'eau renouvelée dans le circuit de filtration (2) ;
   - des moyens de comptage (24) du nombre de baigneurs fréquentant la piscine ; et

- des moyens de mesure (22) d'un paramètre de propreté (C) de l'eau circulant dans le circuit de filtration (2) ; et
- un processeur (28) connecté :

    * à une unité de mémorisation (30) ;
    * aux moyens de mesure (26) d'une quantité d'eau renouvelée dans le circuit de filtration (2) ; et
    * aux moyens de comptage (24) du nombre de baigneurs fréquentant la piscine ; et
    * aux moyens de mesure (22) d'un paramètre de propreté (C) de l'eau circulant dans le circuit de filtration (2) ; **caractérisé en ce que** le processeur (28) pilote les moyens de renouvellement(14, 18, 20) d'une quantité d'eau dans le circuit de filtration (2), et **en ce que** le processeur (30) est apte à mettre en oeuvre un procédé de renouvellement d'eau dans un circuit de filtration (2) d'une piscine selon l'une des revendications 1 à 11, mémorisé par l'unité de mémorisation (30), et **en ce qu'**une partie de l'eau présente dans le circuit de filtration (2) passe à travers un échangeur thermique (16), de sorte à céder des calories à au moins une partie d'une eau destinée à être ajoutée dans le circuit de filtration (2).

14. Circuit de filtration (2) de piscine selon la revendication 13, **caractérisé en ce que** les moyens de mesure (26) d'une quantité d'eau renouvelée dans le circuit de filtration (2) sont agencés de sorte à mesurer une quantité d'eau introduite dans l'échangeur thermique (16) et destinée à être ajoutée dans le circuit de filtration (2).


## Patentansprüche

1. Verfahren zum Erneuern von Wasser in einem Schwimmbadfilterkreislauf (2), das die folgenden Schritte durchführt:

    - Messen der vorangegangenen Menge erneuerten Wassers im Filterkreislauf (2) des Schwimmbads und
    - Messen eines Sauberkeitsparameters (C) des im Filterkreislauf (2) befindlichen Wassers,

**dadurch gekennzeichnet, daß** das Erneuerungsverfahren einen Schritt der Erneuerung einer Wassermenge (VR$_j$) im Filterkreislauf (2) im Verhältnis des Werts eines Produkts aus der vorangegangenen im Filterkreislauf (2) erneuerten Wassermenge (VR$_{j-1}$) und einem Korrekturfaktor (C$_j$) durchführt, wobei der Korrekturfaktor ein Verhältnis zwischen dem gemessenen Sauberkeitsparameter (C) und einem Bezugswert des Sauberkeitsparameters ist.

2. Verfahren zum Erneuern von Wasser in einem Schwimmbadfilterkreislauf (2) gemäß Anspruch 1, **dadurch gekennzeichnet, daß** die erneuerte Wassermenge (VR$_j$) zur Anzahl der das Schwimmbad zwischen dem letzten Wassererneuerungsverfahren (VR$_{j-1}$) und dem Zeitpunkt, an dem das aktuelle Wassererneuerungsverfahren (VR$_j$) durchgeführt wird, benutzt habenden Badenden proportional ist.

3. Verfahren zum Erneuern von Wasser in einem Schwimmbadfilterkreislauf (2) gemäß Anspruch 2, **dadurch gekennzeichnet, daß** die erneuerte Wassermenge (VR$_j$) gleich oder größer als 30 Liter pro das Schwimmbad zwischen dem letzten Wassererneuerungsverfahren (VR$_{j-1}$) im Filterkreislauf (2) des Schwimmbads und dem Zeitpunkt, an dem das aktuelle Wassererneuerungsverfahren (VR$_j$) durchgeführt wird, benutzt habenden Badenden ist.

4. Verfahren zum Erneuern von Wasser in einem Schwimmbadfilterkreislauf (2) gemäß einem der Ansprüche 1 bis 3, **dadurch gekennzeichnet, daß** die erneuerte Wassermenge (VR$_j$) umgekehrt proportional zur Anzahl der das Schwimmbad zwischen einem letzten Wassererneuerungsverfahren (VR$_{j-1}$) und einem vorletzten Wassererneuerungsverfahren (VR$_{j-2}$) benutzt habenden Badenden ist.

5. Verfahren zum Erneuern von Wasser in einem Schwimmbadfilterkreislauf (2) gemäß einem der Ansprüche 1 bis 4, **dadurch gekennzeichnet, daß** die vorangegangene im Filterkreislauf (2) erneuerte Wassermenge am Eingang eines Wärmetauschers gemessen wird, wobei der Wärmetauscherausgang fluidmäßig mit dem Filterkreislauf (2) verbunden ist, und daß ein Teil des im Filterkreislauf (2) vorhandenen Wassers durch den Wärmetauscher fließt, um einen Teil seiner Kalorien an das am Eingang des Wärmetauschers eingeleitete Wasser abzugeben.

6. Verfahren zum Erneuern von Wasser in einem Schwimmbadfilterkreislauf (2) gemäß Anspruch 5, **dadurch gekennzeichnet, daß** die vorangegangene erneuerte Wassermenge (VR$_{j-1}$) gemäß einem Verhältnis zwischen der vorangegangenen, am Eingang des Wärmetauschers eingeleiteten Menge Wassers und der vorgegangenen, im Filterkreislauf (2) erneuerten Menge Wassers bestimmt wird.

7. Verfahren zum Erneuern von Wasser in einem Schwimmbadfilterkreislauf (2) gemäß Anspruch 5 oder 6, **dadurch gekennzeichnet, daß** eine im Filterkreislauf (2) vorhandene und zwischen einer Filtervorrichtung und einer Heizvorrichtung des Filterkreislaufs (2) fließende Wassermenge durch den Wärmetauscher fließt, bevor sie im Bereich der Filtervorrichtung in den Filterkreislauf (2) eingeleitet wird.

8. Verfahren zum Erneuern von Wasser in einem Schwimmbadfilterkreislauf (2) gemäß einem der Ansprüche 5 bis 7, **dadurch gekennzeichnet, daß** die durch den Wärmetauscher fließende erneuerte Wassermenge im Bereich eines Pufferbeckens in den Filterkreislauf (2) eingeleitet wird, wobei das Pufferbecken vom Schwimmbad mit Wasser versorgt wird.

9. Verfahren zum Erneuern von Wasser in einem Schwimmbadfilterkreislauf (2) gemäß einem der Ansprüche 1 bis 8, **dadurch gekennzeichnet, daß** der Sauberkeitsparameter (C) einen Gehalt an Chloraminen beinhaltet.

10. Verfahren zum Erneuern von Wasser in einem Schwimmbadfilterkreislauf (2) gemäß einem der Ansprüche 1 bis 9, **dadurch gekennzeichnet, daß** das Wassererneuerungsverfahren regelmäßig, vorzugsweise täglich durchgeführt wird.

11. Verfahren zum Erneuern von Wasser in einem Schwimmbadfilterkreislauf (2) gemäß einem der Ansprüche 1 bis 10, **dadurch gekennzeichnet, daß** das Messen des Sauberkeitsparameters (C) mindestens einmal zwischen zwei Wassererneuerungen im Filterkreislauf (2) erfolgt und daß das Erneuerungsverfahren durchgeführt wird, sobald der gemessene Wert des Sauberkeitsparameters (C) eine vorgegebenen Wert überschreitet.

12. Informatikprogramm mit Befehlen für die Durchführung eines Verfahrens zum Erneuern von Wasser in einem Schwimmbadfilterkreislauf (2) gemäß einem der Ansprüche 1 bis 11, wenn diese Befehle durch einen Prozessor ausgeführt werden.

13. Schwimmbadfilterkreislauf (2) mit

    - einem Schwimmbad (6) für Badende, wobei das Schwimmbad ein Pufferbecken (8) mit Wasser versorgt, wobei das Pufferbecken eine Pumpe (10) mit Wasser versorgt, wobei die Pumpe einen Filter (12) mit Wasser versorgt, wobei der Filter das Schwimmbad (6) mit Wasser versorgt, und
    - Mitteln (14, 18, 20) zum Erneuern einer Wassermenge im Filterkreislauf (2) und
    - Mitteln (26) zum Messen der im Filterkreislauf (2) erneuerten Wassermenge,
    - Mitteln (24) zum Zählen der Anzahl Badenden, die das Schwimmbad benutzen, und
    - Mitteln (22) zum Messen eines Sauberkeitsparameters (C) des im Filterkreislauf (2) fließenden Wassers und
- einem Prozessor (28), der mit

    * einer Speichereinheit (30),
    * den Mitteln (26) zum Messen einer im Filterkreislauf (2) erneuerten Wassermenge und
    * den Mitteln (24) zum Zählen der Anzahl Badenden, die das Schwimmbad benutzen, und
    * den Mitteln (22) zum Messen eines Sauberkeitsparameters (C) des im Filterkreislauf (2) fließenden Wassers

verbunden ist,

**dadurch gekennzeichnet, daß** der Prozessor (28) die Mittel (14, 18, 20) zum Erneuern einer Wassermenge im Filterkreislauf (2) steuert und daß der Prozessor (28) dazu ausgelegt ist, ein von der Speichereinheit (30) gespeichertes Verfahren zum Erneuern von Wasser in einem Schwimmbadfilterkreislauf (2) gemäß einem der Ansprüche 1 bis 11 durchzuführen, und daß ein Teil des im Filterkreislauf (2) vorhandenen Wassers durch einen Wärmetauscher (16) fließt, um Kalorien an mindestens einen Teil von Wasser abzugeben, das in den Filterkreislauf (2) eingeleitet werden soll.

14. Schwimmbadfilterkreislauf (2) gemäß Anspruch 13, **dadurch gekennzeichnet, daß** die Mittel (26) zum Messen einer im Filterkreislauf (2) erneuerten Wassermenge so ausgelegt sind, daß sie eine in den Wärmetauscher (16) eingeleitete Wassermenge, die dazu bestimmt ist, in den Filterkreislauf (2) eingeleitet zu werden, messen.

## Claims

1. A method for renewing water in a pool filtration circuit (2), implementing the following steps:

    - measuring the previous quantity of water renewed in the pool filtration circuit (2); and
    - measuring a parameter of cleanliness (C) of the water present in the filtration circuit (2);

**characterized in that** the renewal method implements a step of renewing a quantity of water ($VR_j$) in the filtration circuit (2), in proportion of the value of a product between the previous quantity of water renewed ($VR_{j-1}$) in the filtration circuit (2) and a correction factor ($C_i$), the correction factor being a ratio between the parameter of cleanliness (C) measured and a reference value of the parameter of cleanliness.

**2.** The method for renewing water in a pool filtration circuit (2) according to claim 1, **characterized in that** the quantity of renewed water ($VR_j$) is proportional to the number of bathers who used the pool between the last water renewal method ($VR_{j-1}$) and the moment when the present renewal method ($VR_j$) is implemented.

**3.** The method for renewing water in a pool filtration circuit (2) according to claim 2, **characterized in that** the quantity of renewed water ($VR_j$) is equal to or higher than 30 litres per bathers who used the pool between the last water renewal method ($VR_{j-1}$) in a pool filtration circuit (2) and the moment when the present renewal method ($VR_j$) is implemented.

**4.** The method for renewing water in a pool filtration circuit (2) according to one of claims 1 to 3, **characterized in that** the quantity of renewed water ($VR_j$) is inversely proportional to the number of bathers who used the pool between a last water renewal method ($VR_{j-1}$) and a penultimate water renewal method ($VR_{j-2}$).

**5.** The method for renewing water in a pool filtration circuit (2) according to one of claims 1 to 4, **characterized in that** the previous quantity of water renewed in the filtration circuit (2) is measured at the input of a heat exchanger, the output of the heat exchanger being fluidically connected to the filtration circuit (2), and **in that** part of the water present in the filtration circuit (2) passes through the heat exchanger in such a way as to transfer some of its calories to the water introduced at the input of the heat exchanger.

**6.** The method for renewing water in a pool filtration circuit (2) according to claim 5, **characterized in that** the previous quantity of renewed water ($VR_{j-1}$) is determined, according to a ratio between the previous quantity of water introduced at the input of the heat exchanger and the previous quantity of water renewed in the filtration circuit (2).

**7.** The method for renewing water in a pool filtration circuit (2) according to claim 5 or 6, **characterized in that** a portion of water present in the filtration circuit (2) and flowing between a filtration device and a heating device of the filtration circuit (2) passes through the heat exchanger before being reintroduced into the filtration circuit (2) at the filtration device.

**8.** The method for renewing water in a pool filtration circuit (2) according to one of claims 5 to 7, **characterized in that** the quantity of renewed water passing through the heat exchanger is introduced into the filtration circuit (2) at a buffer tank, the buffer tank being supplied with water by the pool.

**9.** The method for renewing water in a pool filtration circuit (2) according to one of claims 1 to 8, **characterized in that** the parameter of cleanliness (C) comprises a chloramine level.

**10.** The method for renewing water in a pool filtration circuit (2) according to one of claims 1 to 9, **characterized in that** the water renewal method is implemented on a periodical basis, preferably on a daily basis.

**11.** The method for renewing water in a pool filtration circuit (2) according to one of claims 1 to 10, **characterized in that** the measurement of the parameter of cleanliness (C) is performed at least once between two water renewals in the filtration circuit (2), and **in that** the renewal method is implemented as soon as the value of the measured parameter of cleanliness (C) exceeds a predetermined value.

**12.** A computer program including instructions for implementing a method for renewing water in a pool filtration circuit (2) according to one of claims 1 to 11 when these instructions are executed by a processor.

**13.** A pool filtration circuit (2) comprising:

- a pool (6) for bathers, the pool supplying water to a buffer tank (8), the buffer tank supplying water to a pump (10), the pump supplying water to a filter (12), the filter supplying water to the pool (6); and
- means (14, 18, 20) for renewing a quantity of water in the filtration circuit (2); and
- means (26) for measuring the quantity of water renewed in the filtration circuit (2);
- means (24) for counting the number of bathers using the pool, and
- means (22) for measuring a parameter of cleanliness (C) of the water circulating in the filtration circuit (2) and a processor (28) connected:

* to a storage unit (30);
* to the means (26) for measuring a quantity of water renewed in the filtration circuit (2); and
* to the means (24) for counting the number of bathers using the pool; and
* to the means (22) for measuring a parameter of cleanliness (C) of the water circulating in the filtration circuit (2) **characterized in that** the processor (28) pilots the means (14, 18, 20) for renewing a quantity of water in the filtration circuit (2), and **in that** the processor (28) is adapted to implement a method for renewing water in a pool filtration circuit (2) according to one of claims 1 to 11, stored in the storage unit (30),

**in that** part of the water present in the filtration circuit (2) passes through a heat exchanger (16), so as to transfer calories to at least part of a water intended to be added into the filtration circuit (2).

14. The pool filtration circuit (2) according to claim 13, **characterized in that** the means (26) for measuring a quantity of water renewed in the filtration circuit (2) are arranged so as to measure a quantity of water introduced into the heat exchanger (16) and intended to be added into the filtration circuit (2).

[Fig. 1]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010052419 A
- DE 102007052520 A1
- DE 102005035238 A1
- EP 0805246 A1